# EUROPÄISCHE PATENTSCHRIFT

(11) **EP 2 718 132 B1**
(45) Veröffentlichungstag und Bekanntmachung des Hinweises auf die Patenterteilung: **01.08.2018**
(21) Anmeldenummer: 12728950.2
(22) Anmeldetag: 11.05.2012
(51) Int. Cl.: B60K 6/48, B60K 6/383, B60K 6/40

(54) **HYBRIDMODUL FÜR EINEN TRIEBSTRANG EINES FAHRZEUGES**
HYBRID MODULE FOR A DRIVETRAIN OF A VEHICLE
MODULE HYBRIDE POUR UNE CHAÎNE CINÉMATIQUE D'UN VÉHICULE

(30) Priorität: 09.06.2011 DE 102011103772
(43) Veröffentlichungstag der Anmeldung: 16.04.2014
(73) Patentinhaber: Schaeffler Technologies AG & Co. KG, 91074 Herzogenaurach (DE)
(72) Erfinder: RUDER, Willi, 77933 Lahr (DE); REITZ, Dierk, 76530 Baden-Baden (DE)
(86) Internationale Anmeldenummer: PCT/DE2012/000484
(87) Internationale Veröffentlichungsnummer: WO 2012/167767

(56) Entgegenhaltungen:
- DE-A1-102007 060 165
- DE-A1-102008 040 491
- DE-A1-102009 032 336
- JP-A- 2002 172 944
- JP-A- 2008 126 703
- US-A- 5 789 823

## Beschreibung

Die vorliegende Erfindung betrifft ein Hybridmodul für einen Antriebsstrang eines Fahrzeuges mit Verbrennungsmotor und Getriebe gemäß dem Oberbegriff des Anspruchs 1.

Aus der DE 10 2009 032 336 ist ein Hybridantriebsstrang eines Kraftfahrzeuges bekannt, welcher einen Verbrennungsmotor, ein Zweimassenschwungrad ("ZMS"), einen elektrischen Antrieb und ein Getriebe umfasst, wobei eine Trennkupplung zwischen Verbrennungsmotor und elektrischen Antrieb angeordnet ist. Diese motorseitig angeordnete Trennkupplung dient dazu, den Verbrennungsmotor vom restlichen Antriebsstrang abzukoppeln, um z. B. mit dem Fahrzeug rein elektrisch zu fahren, und ist in den Rotor des elektrischen Antriebes integriert. Zwischen Ausgangseite ZMS und Reibungskupplung ist eine Zwischenwelle angeordnet, mit der das vom Verbrennungsmotor kommende Drehmoment an eine Nabe einer Kupplungsscheibe der Trennkupplung übertragen wird, wobei zwischen Nabe und Zwischenwelle eine axiale Steckverzahnung vorgesehen ist. Radialkräfte durch das ZMS auf die Zwischenwelle können zu hohen Kräften auf die Lager und zu Versätzen der Zwischenwelle motorseitig bzw. zur Schiefstellung der Zwischenwelle führen.

Aus der US 5 789 823 A ist ein Hybridmodul gemäß dem Oberbegriff des Anspruchs 1 bekannt.

Aus der JP 2002 172944 A ist es bekannt, ein Lager parallel zu einem Freilauf vorzusehen.

Es ist daher eine Aufgabe der vorliegenden Erfindung, die Lagerung des Hybridmoduls der eingangs genannten Art zu verbessern.

Diese Aufgabe wird mit den in Anspruch 1 angegebenen Maßnahmen gelöst.

Weitere vorteilhafte Ausgestaltungen der vorliegenden Erfindung sind Gegenstand der abhängigen Ansprüche.

Bei einem Hybridmodul für einen Triebstrang eines Fahrzeuges mit Verbrennungsmotor, Drehschwingungsdämpfer, Hybridmodul und Getriebe weist das zwischen Verbrennungsmotor und Getriebe wirksame Hybridmodul einen elektrischen Antrieb, eine Trennkupplung und einen Freilauf auf, wobei die Trennkupplung und der Freilauf parallel zueinander jeweils zur Drehmomentübertragung von Verbrennungsmotor in Richtung Getriebe vorgesehen sind, der Freilauf vom Verbrennungsmotor kommendes Drehmoment in Richtung Getriebe überträgt und bei entgegengesetzt gerichtetem Drehmoment öffnet, und wobei Drehschwingungsdämpfer und Hybridmodul über eine Zwischenwelle miteinander verbunden sind, die motorseitig über eine Pilotlagerung unmittelbar an einer Kurbelwelle des Verbrennungsmotors oder mittelbar über den Drehschwingungsdämpfer an der Kurbelwelle abgestützt ist.

Ein Hybridmodul für einen (An-)Triebstrang eines Fahrzeuges mit Verbrennungsmotor, Drehschwingungsdämpfer, Hybridmodul und Getriebe, wobei das zwischen Verbrennungsmotor und Getriebe wirksame Hybridmodul einen elektrischen Antrieb, eine Trennkupplung und einen Freilauf aufweist, und wobei die Trennkupplung und der Freilauf parallel zueinander jeweils zur Drehmomentübertragung von Verbrennungsmotor in Richtung Getriebe vorgesehen sind, der Freilauf vom Verbrennungsmotor kommendes Drehmoment in Richtung Getriebe überträgt und bei entgegengesetzt gerichtetem Drehmoment öffnet, wird nachfolgend auch als "Freilauftrennkupplungsmodul" bezeichnet.

Die Zwischenwelle wird getriebeseitig je nach Betriebszustand des Freilaufes entweder über die Freilaufkörper selbst bei geschlossenem Freilauf oder über ein Lager, (insbesondere ein Rillenkugellager oder ein Gleitlager), bei geöffnetem Freilauf gelagert. Hierbei wird die Zwischenwelle des Freilauftrennkupplungsmoduls einerseits motorseitig im Pilotlager (Wälzlager oder Gleitlager) gelagert und andererseits durch ein weiteres Lager (Wälzlager oder Gleitlager) in der Nähe des Freilaufs oder die Freilaufkörper selbst. Somit werden Schiefstellungen der Zwischenwelle an der Motorseite durch Radialkräfte an der Sekundärseite des Dämpfers verhindert bzw. verkleinert.

Vorzugsweise wird ein vom Freilauf übertragener Anteil am vom Verbrennungsmotor erzeugten Drehmoment durch Einstellung eines von der Trennkupplung übertragbaren Drehmomentes eingestellt, so dass das Fahrzeug wahlweise durch den Verbrennungsmotor oder den elektrischen Antrieb oder kombiniert gleichzeitig durch beide antreibbar ist. Bei diesem Ausführungsbeispiel wird also die Funktion der aus dem Stand der Technik bekannten motorseitigen Trennkupplung auf zwei im Drehmomentenfluss parallel zueinander angeordnete Bauteile, nämlich eine Trennkupplung und einen Freilauf aufgeteilt. Bei offener Trennkupplung wird das gesamte vom Verbrennungsmotor erzeugte Drehmoment über den Freilauf an das Getriebe übermittelt. Der Freilauf sollte dementsprechend so ausgelegt werden, dass dessen übertragbares Drehmoment dem vom Verbrennungsmotor erzeugbaren Drehmoment entspricht. Die Drehmomentenübertragungskapazität der Trennkupplung kann in diesem Ausführungsbeispiel demgegenüber deutlich niedriger als das vom Verbrennungsmotor erzeugbare Drehmoment gewählt werden. Beispielsweise kann bei einem vom Verbrennungsmotor erzeugbaren Drehmoment von 700 bis 800 Nm die Trennkupplung auf 100 Nm bis 130 Nm ausgelegt werden, wohingegen der Freilauf auch auf 700 Nm bis 800 Nm ausgelegt sein sollte. Wird die Trennkupplung teilweise geschlossen, so wird entsprechend dem von der Trennkupplung übertragbaren Drehmoment das durch den Freilauf übertragene Drehmoment verringert. Mit anderen Worten teilt sich das vom Verbrennungsmotor insgesamt erzeugte Drehmoment auf den Freilauf und auf die Trennkupplung auf, entsprechend dem von der Trennkupplung übertragenen Drehmoment (was wiederum von einer Betätigungskraft der Trennkupplung abhängt). Dabei kann die Trennkupplung im verbrennungsmotorischen Betrieb des vorliegenden Triebstranges geschlossen bleiben bzw. geschlossen gehalten werden, so dass als Regelfall eine Drehmomentenaufteilung auf Kupplung und Freilauf erfolgt. Unter Umständen kann es hierbei allerdings vorteilhaft sein, im verbrennungsmotorischen Betrieb die Kupplung zumindest zum Teil zu öffnen bzw. geöffnet zu halten, z.B. bei Zug-Hoch-Schaltungen oder bei Schub-Hoch-Schaltungen.

Mit der vorliegenden Trennkupplung kann Drehmoment in Richtung Verbrennungsmotor übertragen werden (der Freilauf öffnet in dieser Übertragungsrichtung des Drehmomentes). Dementsprechend sind bei geschlossener Trennkupplung ein Anschleppen des Verbrennungsmotors aus dem elektrischen Fahren (beispielsweise bei 80 bis 130 Nm) sowie ein Übertragen eines Schubmomentes im Falle einer Batterie mit vollem Ladezustand (beispielsweise bis zum 90 Nm) realisierbar.

Das vorliegende Hybridmodul umfasst wie vorstehend beschrieben parallel zueinander geschaltet Trennkupplung und Freilauf, wobei das Drehmoment des Verbrennungsmotors in Richtung Triebstrang ausschließlich vom Freilauf, oder von Freilauf und Trennkupplung gemeinsam, oder ggf. ausschließlich über die Trennkupplung übertragen werden kann. Zudem werden vom Triebstrang in Richtung Verbrennungsmotor gerichtete Drehmomente ausschließlich über die Trennkupplung übertragen.

Vorteilhafterweise ist die Trennkupplung als "normally open" Kupplung ausgebildet, also im Grundzustand offen ausgebildet, und wird über eine Schließkraft zugezogen bzw. zugedrückt.

Dies ist insoweit vorteilhaft, als die Kupplung im vorliegenden Triebstrang bei üblicher Betriebsweise eines mit einem solchen Hybridmodul ausgestatteten Fahrzeuges zu 70% offen ist. Der Wirkungsgrad des Aktors ist dementsprechend unter solchen Randbedingungen bei einer "normally open" Kupplung günstiger als bei einer "normally closed" Kupplung. Vorzugsweise ist gemäß einer Alternative die Trennkupplung als "normally closed" Kupplung ausgebildet, also im Grundzustand geschlossen ausgebildet, und wird über eine Öffnungskraft geöffnet, vorzugsweise aufgezogen bzw. aufgedrückt. Eine solche Trennkupplung wird insbesondere dann für den Triebstrang eines Fahrzeugs eingesetzt, wenn bei üblicher Betriebsweise, des mit diesem Hybridmodul ausgestatteten Fahrzeuges, die Trennkupplung in der Regel geschlossen ist, vorzugsweise während des Betriebs mehr als 50% der Zeit geschlossen ist bevorzugt mehr als 60%. Der Wirkungsgrad des Aktors ist dementsprechend unter solchen Randbedingungen bei einer "normally closed" Kupplung günstiger als bei einer "normally o-pen" Kupplung.

Vorzugsweise ist der Freilauf als ein Rollenfreilauf, bevorzugt als ein Klemmkörperfreilauf ausgeführt. Vorzugsweise weist der Freilauf ein Freilauf-Eingangsteil, ein Freilauf-Ausgangsteil und wenigstens ein, bevorzugt mehrere, zwischen diesem Freilauf-Eingangs-und diesem Freilauf-Ausgangsteil angeordneten Sperrteile auf. Vorzugsweise weist ein Freilauf ein als Innenring ausgestaltetes Freilauf-Eingangsteil und ein als Außenring gestaltetes Freilauf-Ausgangsteil auf, oder umgekehrt. Vorzugsweise wird Drehmoment von der Kurbelwelle des Verbrennungsmotors direkt auf das Freilauf-Eingangsteil übertragen.

Vorzugsweise ist der Freilauf axial, in Richtung vom Verbrennungsmotor zur Getriebeeinrichtung, hinter dem Drehschwingungsdämpfer, bevorzugt hinter dem Zweimassenschwungrad, angeordnet. Weiter vorzugsweise ist dieser Freilauf in derselben axialen Richtung vor einem Zentrallager angeordnet. Vorzugsweise ist das Zentrallager dazu vorgesehen wenigstens einen Teil der Trennkupplung und/oder wenigstens einen Teil eines elektromechanischen Energiewandlers, vorzugsweise eines elektromechanischen Energiewandlers, welcher dem Antrieb des Fahrzeugs dient und besonders bevorzugt einen Rotor dieses elektromechanischen Energiewandlers, zu lagern.

Weiter vorzugsweise ist dieser Freilauf axial zwischen diesem Zweimassenschwungrad und diesem Zentrallager angeordnet. Insbesondere durch die Anordnung des Freilaufs zwischen dem Zweimassenschwungrad und dem Zentrallager wird ein Hybridmodul mit geringem Bauraumbedarf ermöglicht.

Vorzugsweise wird die Betätigungseinrichtung in einem Bereich des Hybridmoduls angeordnet, welcher diesem Verbrennungsmotor, vorzugsweise der Kurbelwelle des Verbrennungsmotors benachbart ist. Alternativ hierzu kann die Betätigungseinrichtung in einem Bereich des Hybridmoduls angeordnet werden, welcher diesem Getriebe, vorzugsweise einer Getriebeeingangswelle dieses Getriebes benachbart ist. Weiterhin alternativ kann die Betätigungseinrichtung in einem Bereich des Hybridmoduls angeordnet werden, welcher im Wesentlichen symmetrisch zwischen diesem Verbrennungsmotor und diesem Getriebe liegt.

Vorzugsweise wird die Trennkupplung mittels einer hydraulischen Betätigungseinrichtung betätigt. Weiter vorzugsweise weist diese hydraulische Betätigungseinrichtung einen hydraulischen Zylinder, vorzugsweise mit einer Kreisringfläche auf. Vorzugsweise wird die Trennkupplung mittels einer elektromechanischen Betätigungseinrichtung betätigt. Weiter vorzugsweise weist eine solche elektromechanische Betätigungseinrichtung wenigstens einen elektromechanischen Energiewandler auf, vorzugsweise einen Elektromotor. Die Betätigungseinrichtungen können unabhängig von der Art der Trennkupplung ("normally open/closed") eingesetzt werden.

Die vorliegende Erfindung wird nachfolgend anhand bevorzugter Ausführungsbeispiele in Verbindung mit den zugehörigen Figuren näher erläutert. In diesen zeigen:
- Fig. 1: eine schematische Darstellung eines Triebstranges eines Fahrzeuges mit dem vorliegenden Hybridmodul,
- Fig. 2: ein Ausführungsbeispiel des vorliegenden Hybridmoduls, mit zwei (Radial-)Lagern neben dem Freilauf, wobei eine Radialkraft aus dem Dämpfer am motorseitigen Ende der Zwischenwelle eingeleitet wird,
- Fig. 3A und 3B: ein weiteres Ausführungsbeispiel des vorliegenden Hybridmoduls mit einer Zentrierung/Lagerung der Zwischenwelle über ein Gleit- oder Nadellager als Pilotlager in der Kurbelwelle und genau einer getriebeseitigen Lagerstelle,
- Fig. 4A und 4B: ein Ausführungsbeispiel des Hybridmoduls mit einer Lagerung der Zwischenwelle in der Primärseite des Dämpfers und
- Fig. 5A und 5B: ein weiteres Ausführungsbeispiel des Hybridmoduls mit einer Lagerung der Zwischenwelle in der Sekundärseite des Dämpfers und einer Lagerung der Sekundärseite des Dämpfers in der Primärseite des Dämpfers.

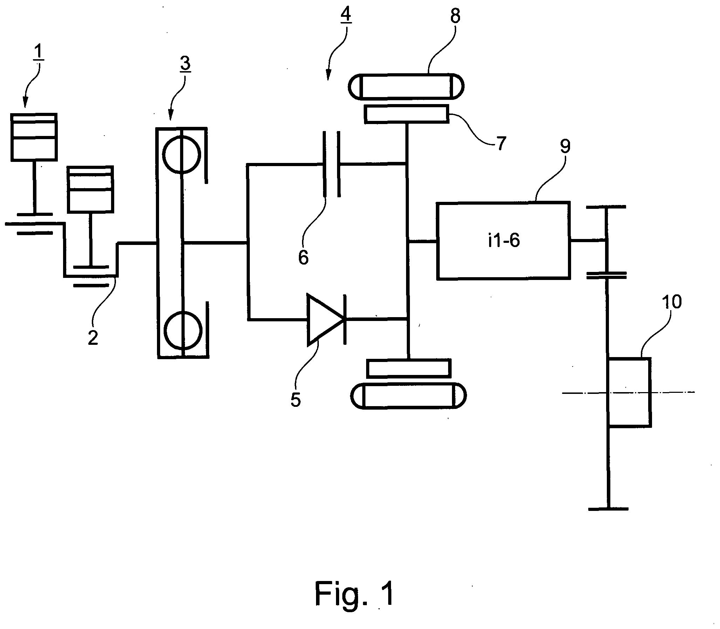

Figur 1 zeigt schematisch einen Triebstrang eines Fahrzeuges mit einem Verbrennungsmotor 1, einem an einer Kurbelwelle 2 des Verbrennungsmotors 1 angebundenem Drehschwingungsdämpfer 3 (vorliegend einem Zweimassenschwungrad), einem Hybridmodul 4 mit Freilauf 5 und Trennkupplung 6, sowie mit Rotor 7 und Stator 8 eines elektrischen Antriebes, einem Getriebe 9, einem Differenzial 10 und nicht im Einzelnen gezeigten angetriebenen Rädern.

Figur 1 ist dabei nur exemplarisch zu verstehen. So umfasst der Verbrennungsmotor 1 gemäß Darstellung Figur 1 "nur" zwei Zylinder. Die vorliegende Lehre ist aber nicht auf eine solche konkrete Anzahl an Zylindern beschränkt. Vielmehr wären auch mehr als zwei Zylinder für den Verbrennungsmotor 1 oder auch eine Parallel- und Reihenschaltung mehrerer Verbrennungsmotoren denkbar. Zudem zeigt Figur 1 ein Zweimassenschwungrad. Alternativ hierzu könnte auch ein Einmassenschwungrad oder eine andere Art der Schwingungsdämpfung, wie ein Massen- oder Fliehkraftpendel oder eine Kombination aus solchen Dämpfungselementen verwendet werden. Abhängig von der Laufruhe des oder der Verbrennungsmotoren könnte ggf. auch auf eine solche Dämpfungseinheit verzichtet werden. In Fig. 1 ist zudem als Getriebe ein (automatisiertes) Sechs-Stufen-Schaltgetriebe 9 gezeigt, ohne dass die vorliegende Lehre hierauf beschränkt wäre. Vielmehr ist die Ausbildung des Getriebes als Automatgetriebe/ Stufengetriebe/ CVT-Getriebe oder andere Arten von Getriebe wie Schubkurbelgetriebe ggf. auch in Verbindung mit einer weiteren Trenneinheit zwischen Getriebe und elektrischem Antrieb 7, 8 (wie einem Drehmomentenwandler, einer weiteren Trennkupplung, wie einer trockenen oder nassen Doppelkupplung oder ähnlichen Baugruppen) denkbar.

Fig. 1 ist zum vorliegenden Hybridmodul insbesondere entnehmbar, dass zwischen Verbrennungsmotor 1 und Getriebe 9 zwei parallele Drehmomentübertragungsstränge vorgesehen sind, einem ersten mit der Trennkupplung 6 und einem zweiten mit dem Freilauf 5, so dass die Funktionen der aus dem Stand der Technik bekannten motorseitigen Trennkupplung auf zwei voneinander verschiedene Bauteile aufgeteilt sind. So kann das von der Brennkraftmaschine 1 erzeugte Moment abhängig von einer an der Kupplung anliegenden Betätigungskraft auf Trennkupplung und Freilauf aufgeteilt werden.

Der Freilauf überträgt (wie Figur 1 entnehmbar) bei Drehmomentübertragung vom Verbrennungsmotor 1 auf das Getriebe 9 und öffnet bei Drehmomentenflussrichtung von Getriebe 9 auf Verbrennungsmotor 1. Drehmomente vom Getriebe 9 in Richtung Verbrennungsmotor 1 sind bei geschlossener Kupplung übertragbar. Dies betrifft insbesondere das Anschleppen des Verbrennungsmotors aus dem elektrischen Fahren sowie das Übertragen des Schubmomentes im Falle einer vollen Batterie.

Im verbrennungsmotorischen Betrieb des Triebstanges bleibt die Trennkupplung aber im Regelfall geschlossen, so dass diese entsprechend ihrer anliegenden Drehmomentenübertragungskapazität das vom Verbrennungsmotor übertragbare Moment jedenfalls anteilig zusammen mit dem Freilauf überträgt.

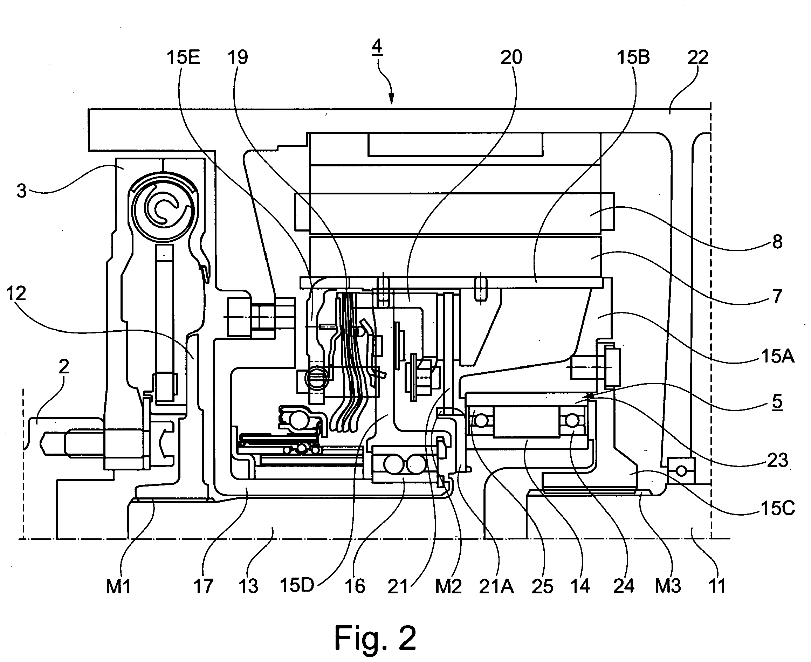

Eine konstruktive Ausgestaltung des in Figur 1 gezeigten Schemas ist Figur 2 entnehmbar, welches das Hybridmodul 4 zwischen dem Zweimassenschwungrad ("ZMS") 3 und einer Getriebeeingangswelle 11 des Getriebes 9 als Halbschnitt zeigt, wobei eine Ausgangsseite 12 des ZMS 3 (=Sekundärseite des ZMS = Ausgangsflansch des ZMS) mit der Zwischenwelle 13, vorliegend über eine axiale Steckverzahnung M1, verbunden ist. Das gesamte vom Verbrennungsmotor 1 erzeugte Drehmoment wird dementsprechend unter Vermittlung des ZMS 3 an die Zwischenwelle 13 des Hybridmoduls übertragen. Die Zwischenwelle 13 ist hierbei das zentrale Bauteil, welches zum einen mit einem Innenring 14 des Freilaufes 5 verbunden ist, bzw. einen hülsenartiger Fortsatz aufweist, der unmittelbar als Innenring 14 des Freilaufes ausgestaltet ist, und welches zum anderen über eine weitre axiale Steckverzahnung M2 mit einer Kupplungsscheibe 21 der Trennkupplung verbunden ist.

Ein Außenring 23 des Freilaufes 5 ist mit einem Teil 15A der Trennkupplung 4 verbunden, das zusammen mit einem Bauteil 15B das Kupplungsgehäuse 15 bildet, wobei das Bauteil 15B zugleich Bestandteil des Rotors des elektrischen Antriebes ist.

Das Kupplungsgehäuse 15 ist, vorzugsweise über eine weitere axiale Steckverzahnung M3, mit der Getriebeeingangswelle 11 des Getriebes 9 verbunden, wobei zwischen Kupplungsgehäuse 15 und Getriebeeingangswelle 11 eine weitere Trennkupplung (beispielsweise ein Wandler oder eine weitere Reibkupplung, wie eine trockene oder nasse Doppelkupplung) angeordnet sein kann.

Das Bauteil 15B des Kupplungsgehäuse 15 ist im Wesentlichen zylindrisch ausgebildet und bildet zusammen mit dem Stützelement 15D den Rotor 7 des elektrischen Antriebs. So sind vorliegend die Permanentmagnete des Rotors unmittelbar am zylindrischen Teil 15B des Kupplungsgehäuses befestigt. Dabei weist das Stützelement 15D an dessen radial inneren Bereich einen hülsenartigen Abschnitt auf, der auf einem Zentrallager 16 abgestützt ist.

Das Zentrallager 16 wiederum ist an einem Gehäuse 17 der Betätigungseinrichtung 18 der Trennkupplung 6 bzw. an einem hülsenartigen Bauteil 17, auf dem die Betätigungseinrichtung abstützbar ist, angeordnet. Die Betätigungseinheit 18 ist am Getriebegehäuse 22 befestigt.

Die Betätigungseinrichtung 18 umfasst vorliegend eine hydraulische Betätigungseinheit mit einem zur Zwischenwelle 13 konzentrisch angeordneten hydraulischen Zylinder, welcher eine Hebelfeder 19 betätigt, die an einem radial erstreckten Bereich 15E des Kupplungsgehäuses 15 der Trennkupplung 6 abgestützt ist und welche eine Anpressplatte 20 in axialer Richtung mit einer Betätigungskraft beaufschlagen kann entsprechend der Stellung des Betätigungszylinders. Entsprechend einer axialen Verlagerung der Anpressplatte 20 wird die Kupplungsscheibe 21 zwischen Anpressplatte 20 und Kupplungsgehäuse der Trennkupplung 6 geklemmt, wodurch die Trennkupplung 6 geschlossen werden kann. Die Kupplungsscheibe 21 der Trennkupplung 6 ist über die axiale Steckverzahnung M2 und über ein Nabenbauteil 21A mit der Zwischenwelle 13 drehfest verbunden.

Wie in Figur 2 gezeigt, kann das Zentrallager 16 (das vorliegend als Festlager ausgebildet ist) im Wesentlichen axial neben (also auf einem vergleichbaren Durchmesser) zum Freilauf 5 angeordnet werden, wobei der Innenring des Freilaufes bzw. die Zwischenwelle die Anbindung zur Kupplungsscheibe sowie zum Zweimassenschwungrad übernimmt und wobei ein äußerer Käfig des Freilaufes 5 über das Kupplungsgehäuse 15 mit dem Getriebeeingang verbunden ist.

Das Ausführungsbeispiel nach Figur 2 zeigt eine motorseitige Trennkupplung eines Hybridmoduls, insbesondere die Lagerung der Zwischenwelle. Die Lagerung der Zwischenwelle und des Freilaufs erfolgt über zwei Lager 24,25, welche direkt neben dem Freilaufkörper angeordnet sind.

Wie Eingangs beschrieben, erfolgt die Lagerung der Zwischenwelle 13 beim Ausführungsbeispiel nach Figur 2 je nach Funktion bzw. Betriebszustand des Freilaufs auf 2 unterschiedlichen Arten:
1) Freilauf geschlossen (d.h. Freilauf überträgt Moment):
   Die Zentrierung der Welle erfolgt größtenteils über die Freilaufkörper selbst durch das Sperren der Freilaufkörper gegen die Freilaufgehäuse. Die beiden Radiallager neben dem Freilaufkörper sind in diesem Zustand nahezu lastfrei. Radialkräfte aus dem Dämpfer führen zu einem Kippmoment auf die Freilaufkörper und belasten diesen zusätzlich. Die Größe des Kippmoments ist abhängig von den Radialkräften der Abtriebsseite des Dämpfers bzw. vom übertragenen Drehmoment.
2) Freilauf offen (d.h. Leerlauf):
   Die Zentrierung der Welle 13 erfolgt über die beiden Radiallager 24,25, die neben dem Freilauf 5 angeordnet sind. Der Freilauf selbst hat in dieser Funktion keine Selbstzentrierungsfunktion. Radialkräfte aus dem Dämpfer 3 führen zu Belastungen der beiden Lager 24,25. Die Größe des Kippmoments ist abhängig von den Radialkräften der Abtriebsseite des Dämpfers bzw. vom übertragenen Drehmoment.
Vor allem im geschlossenen, aber auch im offenen Zustand des Freilaufs können die Radialkräfte der Sekundärseite des Dämpfers so hoch sein, dass dies zu einem Radialversatz der Zwischenwelle über die Steckverzahnung an der Motorseite führt und somit auch zu zusätzlichen Belastungen des Freilaufs.

Radialkräfte durch den Dämpfer über die Steckverzahnung auf die Zwischenwelle können aber zu hohen Kräften auf die Lager bzw. den Freilaufkörper und durch die ungünstigen Hebelarme zu Versätzen der Zwischenwelle motorseitig bzw. zur Schiefstellung der Zwischenwelle führen. Radialkräfte der Sekundärseite des Dämpfers auf die Zwischenwelle entstehen durch Radialversätze der Drehachse des Dämpfers (primär) zur Drehachse der Zwischenwelle durch statische Toleranzen bzw. durch Radialbewegungen der Kurbelwelle. Die Höhe der Radialkräfte ist abhängig vom übertragenen Drehmoment des Dämpfers, somit also vom wirkenden Motormoment des Verbrennungsmotors.

Nachfolgend wird ein Ausführungsbeispiel mit einer geänderten Lagervariante beschrieben, durch die die Lagerkräfte reduziert und die Radialversätze der Zwischenwelle verringert werden.

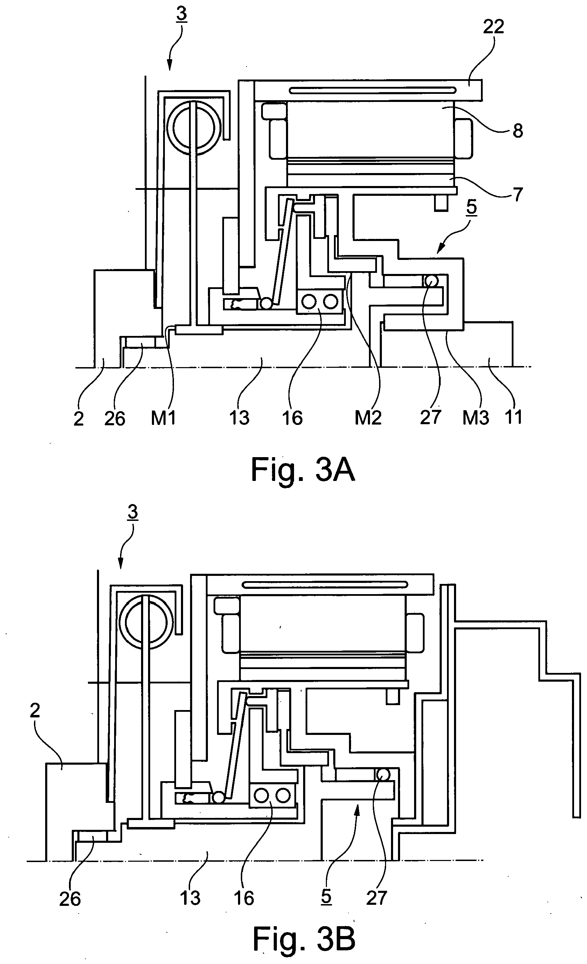

So sind in den Figuren 3A und 3B Ausführungsbeispiele gezeigt, bei denen die Zwischenwelle 13 motorseitig über ein Pilotlager 26, welches als Gleit- oder als Wälzlager ausgeführt werden kann, direkt in der Kurbelwelle 2 abgestützt wird. Weiterhin wird die Zwischenwelle 13 auf der Getriebeseite je nach Funktion des Freilaufs 5 (siehe vorstehende Diskussion der Funktionen bzw. Betriebszustände) entweder über die Freilaufkörper selbst bei geschlossenem Freilauf 5 oder über z. B. ein Rillenkugellager 27 bei geöffnetem Freilauf 5 gelagert. Die Lagerstelle 27 neben den Freilaufkörpern kann axial betrachtet sowohl links als auch rechts des Freilaufs angeordnet sein. Die Zwischenwelle 13 ist somit auf einer guten (d.h. breitest möglichen) Lagerbasis gelagert. Radialversätze zwischen Kurbelwellenachse und Freilaufachse X wirken bei Funktion Freilauf 5 geschlossen allerdings auch als zusätzliches Kippmoment auf den Freilauf. Fig. 3A zeigt hierbei eine Anwendung des Hybridmoduls mit einem (nicht im Einzelnen gezeigten) Doppelkupplungsgetriebe, das über die Eingangswelle bzw. Eingangsnabe 11 mit dem Hybridmodul verbunden ist. Fig. 3B zeigt hierbei eine Anwendung des Hybridmoduls mit einem (nicht im Einzelnen gezeigten) Stufenautomat mit Wandler.

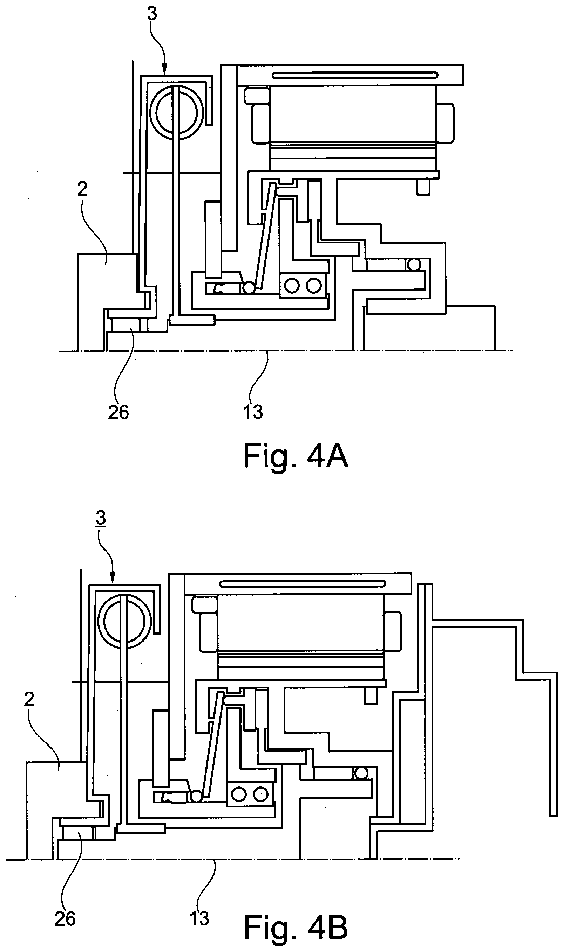

In den Fig. 4A und 4B sind weitere Ausführungsbeispiele mit gegenüber den Ausführungsbeispielen der Fig. 3A und 3B leicht geänderten Lagervarianten gezeigt. So zeigen diese Fig. 4A und 4B Ausführungsbeispiele bei denen die Zwischenwelle 13 motorseitig über ein Pilotlager, welches ebenfalls als Gleit- oder als Wälzlager ausgeführt werden kann, in der Primärseite des Dämpfers 3 abgestützt ist. Die Primärseite des Dämpfers selbst wiederum ist auf der Kurbelwelle 2 zentriert. Ansonsten entsprechend die Lagerungsvarianten gemäß den Fig. 4A und 4B den Ausführungsbeispielen der Fig. 3A und 3B. Fig. 4A zeigt hierbei eine Anwendung des Hybridmoduls mit einem (nicht im Einzelnen gezeigten) Doppelkupplungsgetriebe, das über die Eingangswelle bzw. Eingangsnabe 11 mit dem Hybridmodul verbunden ist. Fig. 4B zeigt hierbei eine Anwendung des Hybridmoduls mit einem (nicht im Einzelnen gezeigten) Stufenautomat mit Wandler.

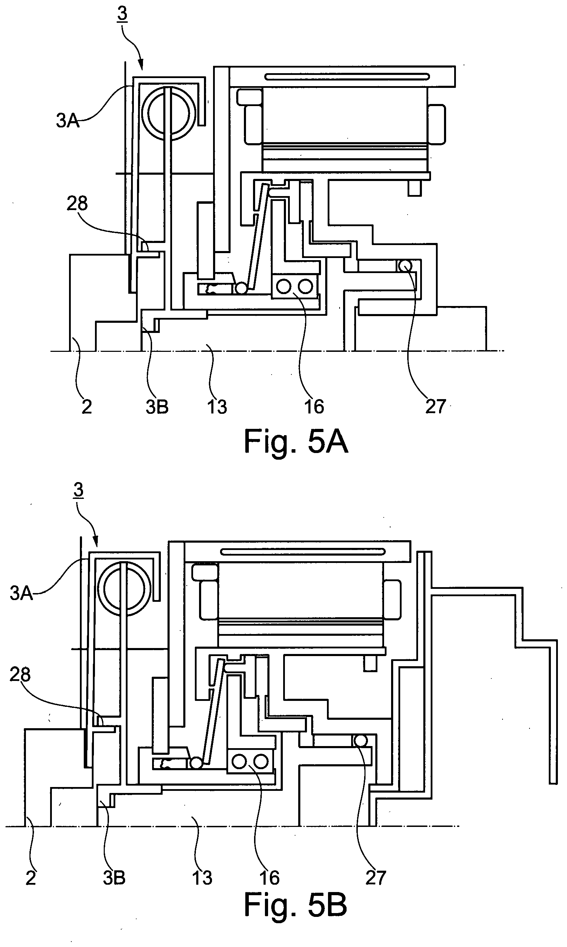

In den Fig. 5A und 5B sind weitere Ausführungsbeispiele mit gegenüber den Ausführungsbeispielen der Fig. 3A und 3B sowie 4A und 4B leicht geänderten Lagervarianten gezeigt. So zeigen die Fig. 5A und 5B Ausführungsbeispiele bei denen die Zwischenwelle 13 motorseitig in der Sekundärseite 3B des Dämpfers 3 über eine Lagerstelle 28 zentriert wird. Bei dieser Variante entsteht keine Relativbewegung der Lagerstelle 28 in Umfangsrichtung. Entsprechend einfach kann diese Zentrierung 27 gestaltet werden. Allerdings muss hierbei die Sekundärseite 3B des Dämpfers 3 entweder auf der Primärseite 3A des Dämpfers 3 oder direkt an der Kurbelwelle 2 entweder mit einem Gleit- oder Wälzlager gelagert werden. Getriebeseitig ist die Lagerung wie im Zusammenhang mit den Ausführungsbeispielen gemäß den Fig. 3A, 3b und 4A, 4B bereits ausgeführt. Fig. 5A zeigt eine Anwendung mit Doppelkupplungsgetriebe, Fig. 5B die Anwendung mit einem Stufenautomat mit Wandler.

Den vorstehend beschriebenen Ausführungsbeispielen gemäß den Fig. 3A,B 4A,B und 5A,B ist gemeinsam, dass die Zwischenwelle einer Freilauftrennkupplung einerseits motorseitig in einem Pilotlager gelagert und andererseits durch ein Lager in der Nähe des Freilaufs oder den Freilaufkörper selbst gelagert ist. Somit werden Schiefstellungen der Zwischenwelle an der Motorseite durch Radialkräfte an der Sekundärseite des Dämpfers verhindert bzw. verkleinert. Die übrigen Merkmale des Hybridmoduls bzw. des Antriebstranges (gerade auch die im Zusammenhang mit den Fig. 1 und 2 beschriebenen) sind durchgängig Bestandteil der vorstehend beschriebenen Ausführungsbeispiele.

## Patentansprüche

1. Hybridmodul (4) für einen Triebstrang eines Fahrzeugs mit einem Verbrennungsmotor (1), einem Drehschwingungsdämpfer (3), dem Hybridmodul (4) und einem Getriebe (9), wobei
das Hybridmodul (4) zwischen dem Verbrennungsmotor (1) und dem Getriebe (9) wirksam ist und einen elektrischen Antrieb (7, 8), eine Trennkupplung (6) und einen Freilauf (5) aufweist,
die Trennkupplung (6) und der Freilauf (5) parallel zueinander jeweils zum Übertragen eines Drehmoments von dem Verbrennungsmotor (1) in Richtung des Getriebes (9) vorgesehen sind, und
der Freilauf (5) ein von dem Verbrennungsmotor (1) kommendes Drehmoment in Richtung des Getriebes (9) überträgt und bei einem entgegengesetzt gerichteten Drehmoment öffnet,
der Drehschwingungsdämpfer (3) und das Hybridmodul (4) über eine Zwischenwelle (13) miteinander verbunden sind,
**dadurch gekennzeichnet, dass**
die Zwischenwelle (13) motorseitig über eine Pilotlagerung (26) unmittelbar an einer Kurbelwelle (2) des Verbrennungsmotors (1) oder über den Drehschwingungsdämpfer (3) mittelbar an der Kurbelwelle (2) abgestützt ist, und
die Zwischenwelle (13) getriebeseitig je nach Betriebszustand des Freilaufs (5) entweder bei geschlossenem Freilauf (5) über Freilaufkörper selbst oder bei geöffnetem Freilauf (5) über ein Lager (27) gelagert ist.

2. Hybridmodul (4) nach Anspruch 1, wobei ein von dem Freilauf (5) übertragener Anteil an einem von dem Verbrennungsmotor (1) erzeugten Drehmoment durch Einstellen eines von der Trennkupplung (6) übertragbaren Drehmoments eingestellt wird, so dass das Fahrzeug wahlweise durch den Verbrennungsmotor (1) oder den elektrischen Antrieb (7, 8) oder kombiniert gleichzeitig durch beide antreibbar ist.

3. Hybridmodul (4) nach Anspruch 1 oder 2, wobei die Trennkupplung (6) in einem Grundzustand geschlossen ausgebildet ist.

4. Hybridmodul (4) nach einem der Ansprüche 1 bis 3, wobei der Freilauf (5) axial, in Richtung von dem Verbrennungsmotor (1) zu dem Getriebe (9), hinter dem Drehschwingungsdämpfer (3) angeordnet ist.

5. Hybridmodul (4) nach einem der Ansprüche 1 bis 4, wobei
die Trennkupplung (6) ein Kupplungsgehäuse (15) aufweist, welches über eine erste drehfeste Verbindung mit einer Getriebeeingangswelle (11) verbunden ist und an welches ein Rotor (7) des elektrischen Antriebs (7, 8) ein Drehmoment überträgt, und
der Freilauf (5) zwischen der Zwischenwelle (13) und dem Kupplungsgehäuse (15) in einem Drehmomentfluss zwischen der Kurbelwelle (2) und dem Kupplungsgehäuse (15) angeordnet ist.

6. Hybridmodul (4) nach Anspruch 5, wobei das Kupplungsgehäuse (15) über ein Zentrallager (16) axial und radial an einem Getriebegehäuse (22) gelagert ist.

7. Hybridmodul (4) nach Anspruch 6, wobei
das Hybridmodul (4) eine hydraulischen oder pneumatische oder elektromechanische oder elektrische Betätigungseinheit zum Betätigen der Trennkupplung (13) aufweist, und
das Zentrallager (16) auf einem Gehäuse (17) der Betätigungseinheit angeordnet ist.

8. Hybridmodul (4) nach einem der Ansprüche 5 bis 7, wobei
die Trennkupplung (13) radial innerhalb des Rotors (7) des elektrischen Antriebs (7, 8) und axial zumindest teilweise überlappend mit dem Rotor (7) des elektrischen Antriebs (7, 8) angeordnet ist, und
der Rotor (7) des elektrischen Antriebs (7, 8) drehfest mit dem Kupplungsgehäuse (15) verbunden ist oder integral mit dem Kupplungsgehäuse (15) ausgebildet ist.

9. Hybridmodul (4) nach einem der Ansprüche 1 bis 8, wobei
die Zwischenwelle (13) über eine erste drehfeste und axial bewegbare Verbindung (M1) mit einer Sekundärseite (3B) des Drehschwingungsdämpfers (3) verbunden ist, und/oder
die Zwischenwelle (13) über eine zweite drehfeste und axial bewegbare Verbindung (M2) mit einer Nabe einer Kupplungsscheibe der Trennkupplung (6) verbunden ist.

10. Hybridmodul nach Anspruch 9, wobei einer eines Innenrings (14) des Freilaufs (5) und eines Außenrings (23) des Freilaufs (5) gleichzeitig eine Anbindung zu der Kupplungsscheibe sowie zu der Kurbelwelle (2) übernimmt und der andere des Innenrings (14) des Freilaufs (5) und des Außenrings (23) des Freilaufs (5) mit der Getriebeeingangswelle (11) verbunden ist.

## Claims

1. Hybrid module (4) for a drivetrain of a vehicle having an internal combustion engine (1), a rotary vibration damper (3), the hybrid module (4) and a gearbox (9), wherein
the hybrid module (4) is active between the internal combustion engine (1) and the gearbox (9) and has an electric drive (7, 8), a separating clutch (6) and a freewheel (5),
the separating clutch (6) and the freewheel (5) are provided parallel to one another in each case for the transmission of a torque from the internal combustion engine (1) in the direction of the gearbox (9), and
the freewheel (5) transmits a torque originating from the internal combustion engine (1) in the direction of the gearbox (9) and opens in the presence of an oppositely directed torque,
the rotary vibration damper (3) and the hybrid module (4) being connected to one another by means of an intermediate shaft (13),
**characterized in that**
the intermediate shaft (13) is, at the engine side, supported by means of a pilot bearing (26) directly on a crankshaft (2) of the internal combustion engine (1) or via the rotary vibration damper (3) indirectly on the crankshaft (2), and
the intermediate shaft (13) is, at the gearbox side, depending on the operating state of the freewheel (5), mounted either by means of freewheel bodies themselves, when the freewheel (5) is closed, or by means of a bearing (27), when the freewheel (5) is open.

2. Hybrid module (4) according to Claim 1, wherein a fraction of a torque generated by the internal combustion engine (1) which is transmitted by the freewheel (5) is adjusted by adjustment of a torque transmissible by the separating clutch (6), such that the vehicle can be driven selectively by the internal combustion engine (1) or by the electric drive (7, 8) or by both simultaneously in combination.

3. Hybrid module (4) according to Claim 1 or 2, wherein the separating clutch (6) is designed to be closed in a default state.

4. Hybrid module (4) according to one of Claims 1 to 3, wherein the freewheel (5) is arranged axially behind the rotary vibration damper (3) in a direction from the internal combustion engine (1) to the gearbox (9).

5. Hybrid module (4) according to one of Claims 1 to 4, wherein
the separating clutch (6) has a clutch housing (15) which is connected by means of a first rotationally conjoint connection to a gearbox input shaft (11) and to which a rotor (7) of the electric drive (7, 8) transmit a torque, and
the freewheel (5) is arranged between the intermediate shaft (13) and the clutch housing (15) in a torque flow between the crankshaft (2) and the clutch housing (15).

6. Hybrid module (4) according to Claim 5, wherein the clutch housing (15) is mounted axially and radially on a gearbox housing (22) by means of a central bearing (16) .

7. Hybrid module (4) according to Claim 6, wherein
the hybrid module (4) has a hydraulic or pneumatic or electromechanical or electrical actuation unit for actuating the separating clutch (13), and
the central bearing (16) is arranged on a housing (17) of the actuation unit.

8. Hybrid module (4) according to one of Claims 5 to 7, wherein
the separating clutch (13) is arranged radially within the rotor (7) of the electric drive (7, 8) and axially so as to at least partially overlap the rotor (7) of the electric drive (7, 8), and
the rotor (7) of the electric drive (7, 8) is connected rotationally conjointly to the clutch housing (15) or is formed integrally with the clutch housing (15) .

9. Hybrid module (4) according to one of Claims 1 to 8, wherein
the intermediate shaft (13) is connected by means of a first rotationally conjoint and axially movable connection (M1) to a secondary side (3B) of the rotary vibration damper (3), and/or
the intermediate shaft (13) is connected by means of a second rotationally conjoint and axially movable connection (M2) to a hub of a clutch disk of the separating clutch (6).

10. Hybrid module according to Claim 9, wherein one out of an inner ring (14) of the freewheel (5) and an outer ring (23) of the freewheel (5) simultaneously realizes a connection to the clutch disk and to the crankshaft (2), and the other out of the inner ring (14) of the freewheel (5) and the outer ring (23) of the freewheel (5) is connected to the gearbox input shaft (11).

## Revendications

1. Module hybride (4) pour une chaîne cinématique d'un véhicule doté d'un moteur à combustion interne (1), d'un amortisseur de vibrations de torsion (3), du module hybride (4) et d'une boîte de vitesses (9), dans lequel
le module hybride (4) est actif entre le moteur à combustion interne (1) et la boîte de vitesses (9) et présente un entraînement électrique (7, 8), un embrayage de séparation (6) et une roue libre (5),
l'embrayage de séparation (6) et la roue libre (5) sont prévus parallèlement l'un à l'autre respectivement pour la transmission d'un couple du moteur à combustion interne (1) en direction de la boîte de vitesses (9), et
la roue libre (5) transmet un couple venant du moteur à combustion interne en direction de la boîte de vitesses (9) et s'ouvre en présence d'un couple dirigé en sens contraire,
l'amortisseur de vibrations de torsion (3) et le module hybride (4) sont reliés l'un à l'autre par un arbre intermédiaire (13),
**caractérisé en ce que**
l'arbre intermédiaire (13) est supporté côté moteur par un appui pilote (26) directement sur un vilebrequin (2) du moteur à combustion interne (1) ou par l'amortisseur de vibrations de torsion (3) indirectement sur le vilebrequin (2), et
l'arbre intermédiaire (13) est supporté côté boîte de vitesses, selon l'état de fonctionnement de la roue libre (5) soit avec la roue libre fermée (5) par le corps de roue libre lui-même soit avec la roue libre ouverte (5) par un palier (27).

2. Module hybride (4) selon la revendication 1, dans lequel une fraction transmise par la roue libre (5) d'un couple produit par le moteur à combustion interne (1) est réglée par le réglage d'un couple transmissible par l'embrayage de séparation (6), de telle manière que le véhicule puisse au choix être entraîné soit par le moteur à combustion interne (1) soit par l'entraînement électrique (7, 8) soit en combinaison simultanément par les deux.

3. Module hybride (4) selon la revendication 1 ou 2, dans lequel l'embrayage de séparation (6) est formé dans un état de base fermé.

4. Module hybride (4) selon l'une quelconque des revendications 1 à 3, dans lequel la roue libre (5) est disposée axialement, dans la direction allant du moteur à combustion interne (1) à la boîte de vitesses (9), après l'amortisseur de vibrations de torsion (3).

5. Module hybride (4) selon l'une quelconque des revendications 1 à 4, dans lequel
l'embrayage de séparation (6) présente un boîtier d'embrayage (15), qui est assemblé à un arbre d'entrée de boîte de vitesses (11) par un premier assemblage calé en rotation et auquel un rotor (7) de l'entraînement électrique (7, 8) transmet un couple, et
la roue libre (5) est disposée entre l'arbre intermédiaire (13) et le boîtier d'embrayage (15) dans un flux de couple entre le vilebrequin (2) et le boîtier d'embrayage (15).

6. Module hybride (4) selon la revendication 5, dans lequel le boîtier d'embrayage (15) est supporté axialement et radialement sur un carter de boîte de vitesses (22) par un palier central (16).

7. Module hybride (4) selon la revendication 6, dans lequel
le module hybride (4) présente une unité d'actionnement hydraulique ou pneumatique ou électromécanique ou électrique pour actionner l'embrayage de séparation (13), et
le palier central (16) est disposé sur un boîtier (17) de l'unité d'actionnement.

8. Module hybride (4) selon l'une quelconque des revendications 5 à 7, dans lequel
l'embrayage de séparation (13) est disposé radialement à l'intérieur du rotor (7) de l'entraînement électrique (7, 8) et axialement au moins en partie en chevauchement avec le rotor (7) de l'entraînement électrique (7, 8), et
le rotor (7) de l'entraînement électrique (7, 8) est relié de façon calée en rotation au boîtier d'embrayage (15) ou est formé intégralement avec le boîtier d'embrayage (15).

9. Module hybride (4) selon l'une quelconque des revendications 1 à 8, dans lequel
l'arbre intermédiaire (13) est relié à un côté secondaire (3B) de l'amortisseur de vibrations de torsion (3) par un premier assemblage calé en rotation et axialement mobile (M1), et/ou
l'arbre intermédiaire (13) est relié à un moyeu d'un disque d'embrayage de l'embrayage de séparation (6) par un deuxième assemblage calé en rotation et mobile axialement (M2).

10. Module hybride (4) selon la revendication 9, dans lequel un d'un anneau intérieur (14) de la roue libre (5) et d'un anneau extérieur (23) de la roue libre (5) assure en même temps une liaison avec le disque d'embrayage ainsi qu'avec le vilebrequin (2) et l'autre de l'anneau intérieur (14) de la roue libre (5) et de l'anneau extérieur (23) de la roue libre (5) est assemblé à l'arbre d'entrée de boîte de vitesses (11).
